# EUROPEAN PATENT APPLICATION

(11) **EP 3 876 335 A1**
(43) Date of publication of application: **08.09.2021**
(21) Application number: 18938391.2
(22) Date of filing: 30.10.2018
(51) Int. Cl.: H01M 10/44, H02J 7/00

(54) **BATTERY CONTROL CIRCUIT, BATTERY AND UNMANNED AERIAL VEHICLE**

(71) Applicant: SZ DJI Technology Co., Ltd., Shenzhen, Guangdong 518057 (CN)
(72) Inventor: LAN, Qiu, Shenzhen, Guangdong 518057 (CN)
(74) Representative: Appelt, Christian W.
(86) International application number: PCT/CN2018/112725
(87) International publication number: WO 2020/087284

(57) **Abstract**

A battery control circuit includes a switch control unit, a voltage conversion circuit, and a port. The switch control circuit is configured to control turning-on and turning-off of a battery cell and the voltage conversion circuit. One terminal of the voltage conversion circuit is connected to the switch control circuit and the other terminal of the voltage conversion circuit is connected to the port. The port is configured to connect an external device. Regarding the battery cell and the external device, the voltage conversion circuit is configured to convert a voltage of one of them and the converted voltage is used to charge the other one of them.

## Description

### FIELD OF THE DISCLOSURE

The present disclosure relates to the field of battery control, and, more particularly, relates to a battery control circuit, battery, and an unmanned aerial vehicle (UAV).

### BACKGROUND

A battery is generally equipped with a battery control circuit. Under a control of the battery control circuit, the battery can be discharged or charged. An existing battery is provided with two different types of ports. One port is configured to connect an external load, and the battery discharges to the external load through the port. The other port is configured to connect an external power source, and the external power source charges the battery through the other port. Accordingly, the existing battery requires two supporting charging cables, which is troublesome to use and inconvenient.

### BRIEF SUMMARY OF THE DISCLOSURE

The present disclosure provides a battery control circuit, including a switch control circuit, a voltage conversion circuit and a port. The switch control circuit is configured to control turning-on and turning-off of a battery cell and the voltage conversion circuit. One terminal of the voltage conversion circuit is connected to the switch control circuit, and the other terminal is connected to the port. The port is configured to connect an external device. Regarding the battery cell and the external device, the voltage conversion circuit is configured to convert a voltage of one of them and the converted voltage is used to charge the other one of them.

The present disclosure further provides a battery including a battery cell, a housing, and the above-described battery control circuit. The battery cell and the battery control circuit are packaged in the housing.

The present disclosure further provides an unmanned aerial vehicle (UAV), which includes a body and the above battery. The body is provided with a slot for installing the battery. A power receiving port is provided in the slot for connecting a power supply port of the battery.

It can be seen from the above technical solutions that the embodiments of the present disclosure have at least the following beneficial effects.

A port of the battery control circuit can be connected to a load as well as a power supply. A bidirectional charging, that is, the battery cell charging the load and the power supply charging the battery cell, can be realized through the port and one supporting charging cable. Compared with an existing technology, circuit structure in the present disclosure is simpler, cost is lower, usage is more convenient and simpler, and customer experience is improved.

### BRIEF DESCRIPTION OF THE DRAWINGS

Accompanying drawings are used to provide a further understanding of the present disclosure and constitute a part of the specification. Together with following specific embodiments, the accompanying drawings are used to explain the present disclosure, but do not constitute a limitation to the present disclosure.
FIG. 1 illustrates a schematic diagram of a battery control circuit in an embodiment of the present disclosure;
FIG. 2 illustrates a circuit diagram of a battery control circuit in an embodiment of the present disclosure;
FIG. 3 illustrates a circuit diagram of a battery control circuit in another embodiment of the present disclosure;
FIG. 4 illustrates a circuit diagram of a battery control circuit in yet another embodiment of the present disclosure;
FIG. 5 illustrates a circuit diagram of a battery control circuit in still another embodiment of the present disclosure;
FIG. 6 illustrates a circuit diagram of a battery control circuit in still another embodiment of the present disclosure;
FIG. 7 illustrates a schematic diagram of a battery in an embodiment of the present disclosure;
FIG. 8 illustrates a circuit diagram of a battery control circuit of a battery in an embodiment of the present disclosure; and
FIG. 9 illustrates a schematic diagram of a UAV in an embodiment of the present disclosure.

Reference numerals: 1- battery control circuit; 2- battery; 3- housing; 4- UAV; 10- switch control circuit; 20-voltage conversion circuit; 30- port; 40-external device; 11- switch controller; 20a- buck-boost circuit; 21a- buck-boost controller; 20b-buck circuit; 21b- step-down controller; 20c- boost circuit; 21c- boost controller; 50- power supply port; 60- electrical device; 41- body; 411- slot; 412- power receiving port.

Bat- battery cell; Q1, Q2, Q3, Q4, Q5, Q6 - nMOSFET; D1, D2, D3, D4, D5 - parasitic diode; Rs- current detection resistor; L1- energy storage inductor; Vin- power supply voltage; Vout - Load charging voltage; Ds, Dj- freewheeling diode.

### DETAILED DESCRIPTION

Technical solutions of the present disclosure will be clearly and completely described below in conjunction with embodiments and accompanying drawings in the embodiments. Obviously, the described embodiments are only part of embodiments of the present disclosure, rather than all the embodiments. Based on the embodiments in the present disclosure, all other embodiments obtained by those skilled in the art without creative efforts shall fall within the protection scope of the present disclosure.

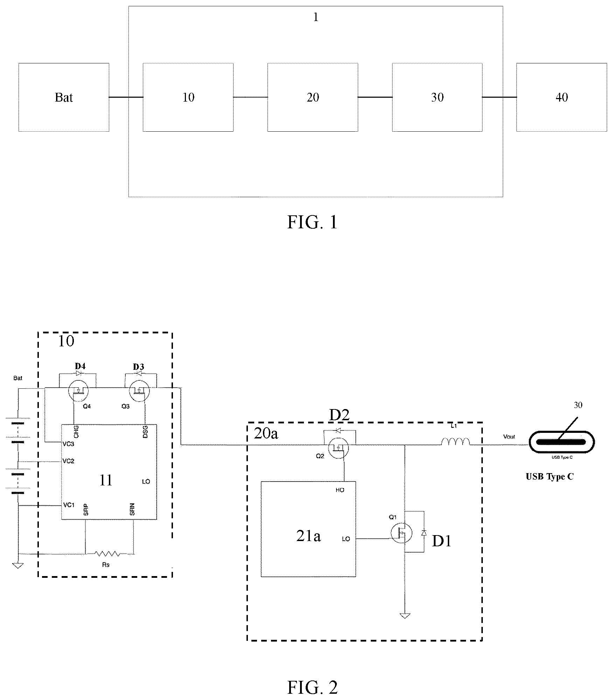

An embodiment of the present disclosure provides a battery control circuit 1, as shown in FIG. 1, including a switch control circuit 10, a voltage conversion circuit 20, and a port 30. The switch control circuit 10 is configured to control turning-on and turning-off of a battery cell Bat and the voltage conversion circuit 20. One terminal of the voltage conversion circuit 20 is connected to the switch control circuit 10, and the other terminal is connected to the port 30. The port 30 is configured to connect an external device 40. Regarding the battery cell Bat and the external device 40, the voltage conversion circuit 20 is configured to convert a voltage of one of them and the converted voltage is used to charge the other one of them.

In the present embodiment, the voltage conversion circuit 20 is a buck-boost circuit 20a. The external device 40 can be either a load or a power source, that is, the port 30 of the battery control circuit 1 can be connected to a load or a power source. When the port 30 is connected to the load, the buck-boost circuit 20a is configured to reduce a cell voltage to a load charging voltage Vout to charge the load. When the port 30 is connected to the power source, the buck-boost circuit 20a is configured to boost the power supply voltage to a cell charging voltage to charge the battery cell Bat.

Continuing to refer to FIG. 2, the buck-boost circuit 20a includes: a first switch, a second switch, an energy storage inductor L1, and a buck-boost controller 21a. A first terminal of the switch control circuit 10 is connected to the battery cell Bat. One terminal of the second switch is connected to a second terminal of the switch control circuit 10, and the other terminal is connected to one terminal of the energy storage inductor L1 and one terminal of the first switch. The other terminal of the energy storage inductor L1 is connected to the port 30. The other terminal of the first switch is grounded, and the buck-boost controller 21a is configured to control turning-on and turning-off of the first switch and the second switch.

In a circuit shown in Figure 2, the first switch is nMOSFET Q1, and the second switch is nMOSFET Q2. A drain of Q2 is connected to a source of Q3, a source of Q2 is connected to one terminal of the energy storage inductor L1 and a drain of Ql, and a source of Q1 is grounded. A gate of Q1 and a gate of Q2 are respectively connected to control pins LO and HO of the buck-boost controller 21a. The other terminal of the energy storage inductor L1 is connected to the port 30.

The switch control circuit 10 includes: a switch controller 11, a third switch, and a fourth switch. The third switch is nMOSFET Q3, and the fourth switch is nMOSFET Q4. A source of Q4 is connected to a positive electrode of the battery cell Bat, and a negative electrode of the battery cell Bat is grounded. Q3 and Q4 are connected back-to-back, and a drain of Q4 is connected to a drain of Q3. When a load is being charged, the source of Q4 receives a cell voltage, and the source of Q3 outputs the cell voltage. When the battery cell Bat is being charged, the source of Q3 receives a cell charging voltage, and the source of Q4 outputs the cell charging voltage. A gate of Q3 and a gate of Q4 are respectively connected to two control pins of the switch controller 11: CHG and DSG. The battery cell Bat is also connected to VC1, VC2 and VC3 pins of the switch controller 11. A current detection resistor Rs is connected between the SRP and SRN pins of the switch controller 11.

In this embodiment, when the battery control circuit 1 is working, if the port 30 is connected to a load, the CHG pin of the switch controller 11 maintains a low-level output, and Q4 is in a turning-off state. DSG pin maintains a high-level output, and Q3 is in a turning-on state. The LO pin of the buck-boost controller 21 a maintains a low-level output, and Q1 is in a turning-off state.

The HO pin of the buck-boost controller 21a outputs pulse signals. When the HO pin outputs a high level, Q2 is controlled to be turned on. The cell voltage passes through the parasitic diode D4 of Q4 and Q3 and is output at the source of Q3. The cell voltage output by the source of Q3 drops to the load charging voltage Vout after passing through Q2 and the energy storage inductor L1. The load charging voltage Vout charges a load through the port 30. At a same time, the cell voltage output by the source of Q3 also charges the energy storage inductor L1 through Q2. When the HO pin outputs a low level, Q2 is controlled to be turned off. The energy storage inductor L1, the parasitic diode D1 of Q1 , and the load form a loop. The load charging voltage Vout output by the energy storage inductor L1 continues to charge the load through port 30 to realize a step-down charging of the load.

When the port 30 is connected to a power supply, the DSG pin of the switch controller 11 maintains a low-level output, and Q3 is in a turning-off state. The CHG pin maintains a high-level output, and Q4 is in a turning-on state. The HO pin of the buck-boost controller 21a maintains a low-level output, and Q2 is in a turning-off state.

The LO pin of the buck-boost controller 21a outputs pulse signals. When the LO pin outputs a high level, Q1 is controlled to be turned on. A power supply voltage rises to a cell charging voltage after passing through the energy storage inductor L1. The cell charging voltage charges the battery cell Bat through the parasitic diode D2 of Q2, the parasitic diode D3 of Q3, and Q4. The power supply charges the energy storage inductor L1 at a same time. When the LO pin outputs a low level, Q1 is controlled to be turned off. The cell charging voltage output by the energy storage inductor L1 charges the battery cell Bat through the parasitic diode D2 of Q2, the parasitic diode D3 of Q3, and Q4, so as to realize a boost charging of the battery cell Bat.

In the present embodiment, the port 30 is a USB interface, and the USB interface can be any type of USB interface, such as but not limited to a USB micro interface, a USB mini-interface, and a USB type C interface. In an existing technology, charging is achieved through two ports, that is, a battery cell charges a load through one port, a power source charges the battery cell through the other port. Correspondingly two supporting charging cables are required. In the present embodiment, one port of the battery control circuit 1 can be connected to both a load and a power supply. Through the port and a supporting charging cable, a bidirectional charging can be realized. That is, the battery cell charges the load, and the power supply charges the battery cell. Compared with an existing technology, circuit structure in the present embodiment is simpler, cost is lowered, usage is more convenient and simpler, and customer experience is improved.

The above is only an exemplary description, and the present embodiment is not limited thereto. The first switch, the second switch, the third switch, and the fourth switch are not limited to nMOSFETs, and other unidirectional switching elements connected in parallel with a reverse bypass can also be used.

The battery control circuit 1 may include a plurality of the buck-boost circuits 20a. One terminal of each buck-boost circuit 20a is connected to the switch control circuit 10, and the other terminal is connected to a port 30. Each port 30 can be connected to a load or a power source. Therefore, the battery control circuit 1 can simultaneously charge multiple loads and can also use multiple power sources to simultaneously charge the battery cell.

For a battery control circuit in another embodiment of the present disclosure, for the sake of brief description, content that is same as or similar to the previous embodiment will not be repeated. The following only focuses on content that is different from the previous embodiment.

A switch control circuit 10 in the present embodiment includes: a third switch, a fourth switch, and a switch controller 11. One terminal of the fourth switch is connected to the battery cell Bat, and the other terminal of the fourth switch is connected to one terminal of the third switch. The switch controller 11 is configured to control turning-on and turning-off of the third switch and the fourth switch, so that the other terminal of the third switch outputs a cell voltage.

The buck-boost circuit 20a includes a fifth switch and the energy storage inductor L1. One terminal of the fifth switch is connected to the other terminal of the third switch and one terminal of the energy storage inductor L1, and the other terminal of the fifth switch is grounded. The other terminal of the energy storage inductor L1 is connected to the port 30. The buck-boost controller 21a is configured to control turning-on and turning-off of the fifth switch.

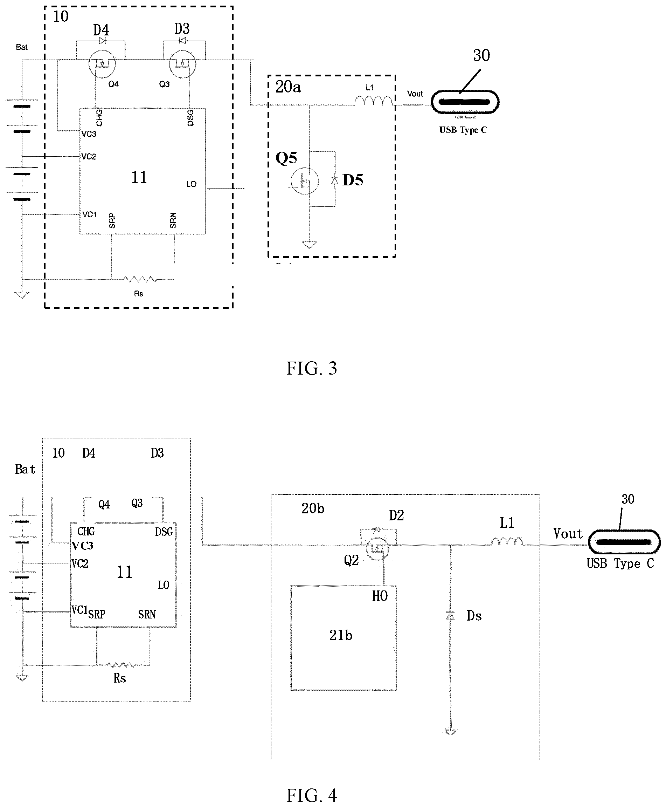

Referring to FIG. 3, the third switch of the switch control circuit 10 is an nMOSFET Q3, and the fourth switch is an nMOSFET Q4. A source of Q4 is connected to a positive electrode of the battery cell Bat, and a negative electrode of the battery cell Bat is grounded. Q3 and Q4 are connected back-to-back, and a drain of Q4 is connected to a drain of Q3. When a load is being charged, the source of Q4 receives a cell voltage, and the source of Q3 outputs the cell voltage. When the battery cell Bat is being charged, the source of Q3 receives a cell charging voltage, and the source of Q4 outputs the cell charging voltage. A gate of Q3 and a gate of Q4 are respectively connected to two control pins of the switch controller 11: CHG and DSG. The battery cell Bat is also connected to VC1, VC2 and VC3 pins of the switch controller 11. A current detection resistor Rs is connected between SRP and SRN pins of the switch controller 11.

The fifth switch of the buck-boost circuit 20a is an nMOSFET Q5. A drain of Q5 is connected to the source of Q3 and one terminal of the energy storage inductor L1, and a source of Q5 is grounded. The other terminal of the energy storage inductor L1 is connected to the port 30. A gate of Q5 is connected to a control pin LO of the switch controller 11.

In the present embodiment, when the battery control circuit 1 is working, if the port 30 is connected to a load, the CHG pin of the switch controller 11 maintains a low-level output and Q4 is in a turning-off state. The LO pin maintains a low-level output, and Q5 is in a turning-off state.

The DSG pin of the switch controller 11 outputs pulse signals. When the DSG pin outputs a high level, Q3 is controlled to be turned on. The cell voltage passes through the parasitic diode D4 of Q4 and Q3 and is output at the source of Q3. The cell voltage output by the source of Q3 drops to the load charging voltage Vout through the energy storage inductor L1, and the load charging voltage Vout charges the load through the port 30. At a same time, the cell voltage output by the source of Q3 also charges the energy storage inductor L1. When the DSG pin outputs a low level, Q3 is controlled to be turned off. The energy storage inductor L1, the parasitic diode D5 of Q5, and the load form a loop. The load charging voltage Vout output by the energy storage inductor L1 continues to charge the load through the port 30 to realize a step-down charging of the load.

When the port 30 is connected to a power supply, the DSG pin of the switch controller 11 maintains a low-level output and Q3 is in a turning-off state; the CHG pin maintains a high-level output and Q4 is in a turning-on state.

The LO pin of the switch controller 11 outputs pulse signals. When the LO pin outputs a high level, Q5 is controlled to be turned on. The power supply voltage rises to a cell charging voltage through the energy storage inductor L1, and the cell charging voltage charges the battery cell Bat through the parasitic diode D3 of Q3 and Q4. The power supply charges the energy storage inductor L1 at a same time. When the LO pin outputs a low level, Q5 is controlled to be turned off. The cell charging voltage output by the energy storage inductor L1 charges the battery cell Bat through the parasitic diode D3 of Q3 and Q4, so as to realize a boost charging of the battery cell Bat.

The battery control circuit in the present embodiment can also realize a bidirectional charging through a port and a supporting charging cable, that is, the battery cell charges a load, and a power source charges a battery cell. Compared with an existing technology, circuit structure in the present embodiment is simpler, the cost is lower, use is more convenient and simpler, and customer experience is improved. The circuit structure shares a controller and a switch with the switch control circuit 10. Compared with the previous embodiment, a buck-boost controller and a switch are omitted in the present embodiment, thereby further reducing cost and simplifying circuit structure.

For a battery control circuit in another embodiment of the present disclosure, for the sake of brief description, content that is same as or similar to the above embodiment will not be repeated, and the following only focuses on content that is different from the above embodiment.

In the battery control circuit 1 in the present embodiment, the external device 40 is a load. The voltage conversion circuit 20 is a step-down circuit 20b. The step-down circuit 20b is configured to reduce the cell voltage to the load charging voltage Vout to charge the load. A first terminal of the switch control circuit 10 is connected to the battery cell Bat. A second terminal of the switch control circuit 10 is configured to output a cell voltage. An input terminal of the step-down circuit 20b is connected to the second terminal of the switch control circuit 10. An output terminal of the step-down circuit 20b is connected to the port 30 for stepping down and outputting the cell voltage.

Referring to FIG. 4, in the battery control circuit 1 of the present embodiment, structure of the switch control circuit 10 is same as that of FIG. 2. A difference is that the step-down circuit 20b in the present embodiment includes a step-down controller 21b, a second switch Q2, a freewheeling diode Ds and the energy storage inductor L1, which is equivalent to replacing Q1 in FIG. 2 with the freewheeling diode Ds. A drain of Q2 is connected to a source of Q3, and the source is connected to one terminal of the energy storage inductor L1 and a cathode of the freewheeling diode. The other terminal of the energy storage inductor L1 is connected to the port 30. An anode of the freewheeling diode is grounded. A gate of Q2 is connected to a pin HO of the step-down controller 21b.

In the present embodiment, when the battery control circuit 1 is working, the CHG pin of the switch controller 11 maintains a low-level output, and Q4 is in a turning-off state. The DSG pin maintains a high-level output, and Q3 is in a turning-on state.

The HO pin of the buck-boost controller 21a outputs pulse signals. When the HO pin outputs a high level, Q2 is controlled to be turned on. A cell voltage passes through the parasitic diode D4 of Q4 and Q3 and is output at the source of Q3. The cell voltage output by the source of Q3 drops to the load charging voltage Vout after passing through Q2 and the energy storage inductor L1, and the load charging voltage Vout charges the load through the port 30. At a same time, the cell voltage output by the source of Q3 also charges the energy storage inductor L1 through Q2. When the HO pin outputs a low level, Q2 is controlled to be turned off. The energy storage inductor L1, the freewheeling diode , and the load form a loop. The load charging voltage Vout output by the energy storage inductor L1 continues to charge the load through the port 30 to realize a step-down charging of the load.

The battery control circuit 1 in the present embodiment can charge a load through the port 30 and is suitable for unidirectional charging scenarios where only a load needs to be charged from a battery, and the battery does not need to be charged from a power source. Compared with the above embodiment, circuit structure in the present embodiment is simpler, and cost is further reduced.

For a battery control circuit in another embodiment of the present disclosure, for the sake of brief description, content that is same as or similar to the previous embodiment will not be repeated. The following only focuses on content that is different from the previous embodiment.

The battery control circuit 1 in the present embodiment includes the energy storage inductor L1 and a freewheeling diode. The switch control circuit 10 includes a third switch, a fourth switch, and a switch controller 11. One terminal of the fourth switch is connected to the battery cell Bat, and the other terminal of the fourth switch is connected to one terminal of the third switch. The switch controller 11 is configured to control turning-on and turning-off of the third switch and the fourth switch, so that the other terminal of the third switch outputs a cell voltage. The third switch, the energy storage inductor L1, the freewheeling diode, and the switch controller 11 form a step-down circuit 20b. An output terminal of the step-down circuit 20b is connected to the port 30 for stepping down and outputting the cell voltage.

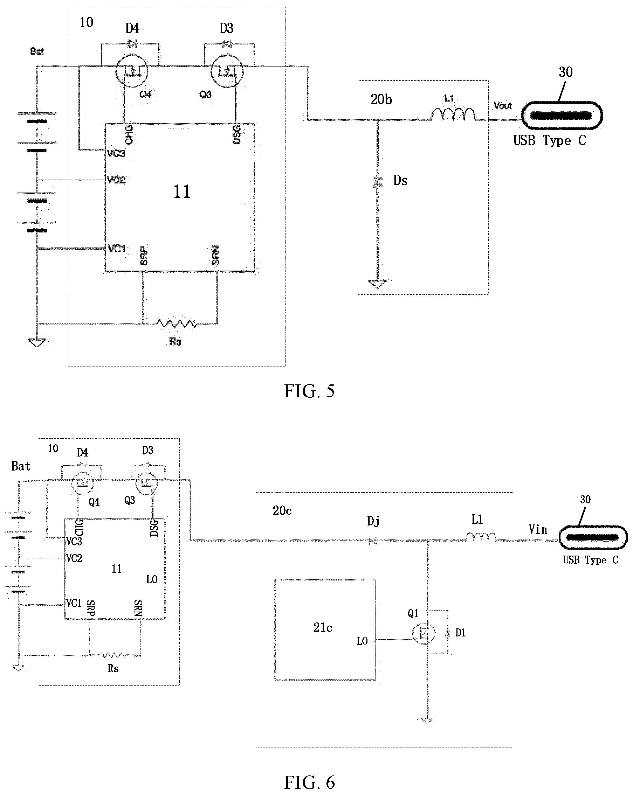

Referring to FIG. 5, in the battery control circuit 1 of the present embodiment, structure of the switch control circuit 10 is same as that of FIG. 4, A difference is that the step-down circuit 20b only includes the freewheeling diode Ds and the energy storage inductor L1. A source of Q3 is connected to one terminal of the energy storage inductor L1 and a cathode of the freewheeling diode. The other terminal of the energy storage inductor L1 is connected to the port 30. An anode of the freewheeling diode is grounded.

In this embodiment, when the battery control circuit 1 is working, the CHG pin of the switch controller 11 maintains a low-level output, and Q4 is in a turning-off state.

The DSG pin of the switch controller 11 outputs pulse signals. When the DSG pin outputs a high level, Q3 is controlled to be turned on. A cell voltage passes through the parasitic diode D4 of Q4 and Q3 and is output at the source of Q3. The cell voltage output by the source of Q3 drops to the load charging voltage Vout through the energy storage inductor L1. The load charging voltage Vout charges the load through the port 30. At a same time, the cell voltage output by the source of Q3 also charges the energy storage inductor L1. When the DSG pin outputs a low level, Q3 is controlled to be turned off. The energy storage inductor L1, the freewheeling diode , and the load form a loop. The load charging voltage Vout output by the energy storage inductor L1 continues to charge the load through the port 30 to realize a step-down charging of the load.

The battery control circuit 1 in the present embodiment shares a controller and a switch with the switch control circuit 10. Compared with the previous embodiment, a step-down controller and a switch are omitted in the present embodiment, thereby further reducing cost and simplifying circuit structure.

For a battery control circuit in another embodiment of the present disclosure, for the sake of brief description, content that is same as or similar to the above embodiment will not be repeated, and the following will only focus on content that is different from the above embodiment.

In the battery control circuit 1 in the present embodiment, the external device 40 is a power source. The voltage conversion circuit 20 is a boost circuit 20c for boosting a power supply voltage to a cell charging voltage to charge the battery cell Bat. An input terminal of the boost circuit 20c is connected to the port 30 for inputting the power supply voltage. An output terminal of the boost circuit 20c is configured to output the battery charging voltage. A second terminal of the switch control circuit 10 is connected to the output terminal of the boost circuit 20c. A first terminal of the switch control circuit 10 is connected to the battery cell Bat for outputting the cell charging voltage.

As shown in FIG. 6, structure of the switch control circuit 10 is same as that of FIG. 1. A difference from FIG. 1 is that the boost circuit 20c includes a boost controller 21c, a first switch Q1, a freewheeling diode Dj and the energy storage inductor L1, which is equivalent to replacing Q2 in FIG. 1 with the freewheeling diode Dj. A cathode of Dj is connected to the source of Q3. An anode of Dj is connected to one terminal of the energy storage inductor L1 and a drain of Q1. A source of Q1 is grounded. The other terminal of the energy storage inductor L1 is connected to the port 30. A gate of Q1 is connected to the pin LO of the boost controller 21c.

In the present embodiment, when the battery control circuit 1 is working, the CHG pin of the switch controller 11 maintains a high-level output, and Q4 is in a turning-on state. The DSG pin maintains a low-level output, and Q3 is in a turning-off state.

The LO pin of the boost controller 21c outputs pulse signals. When the LO pin outputs a high level, Q1 is controlled to be turned on. A power supply voltage Vin rises to a cell charging voltage through the energy storage inductor L1. The cell charging voltage charges the battery cell Bat through the freewheeling diode, the parasitic diode D3 of Q3, and Q4. The power supply charges the energy storage inductor L1 at a same time. When the LO pin outputs a low level, Q1 is controlled to be turned off. The energy storage inductor L1 charges the battery cell Bat through the freewheeling diode, the parasitic diode D3 of Q3, and Q4 to realize a boost charging of the battery cell Bat.

The battery control circuit 1 in the present embodiment can charge the battery cell through a port and is suitable for unidirectional charging scenarios where only a battery cell needs to be charged by a power source, and the battery cell does not need to charge a load. Compared with the above embodiment, circuit structure in the present embodiment is simpler, and cost is further reduced.

One embodiment of the present disclosure also provides a battery. A battery 2 includes a battery cell Bat, a housing 3, and the battery control circuit 1. The battery cell Bat and the battery control circuit 1 are packaged in the housing 3. The battery control circuit 1 may be the battery control circuit 1 described in any of the above embodiments.

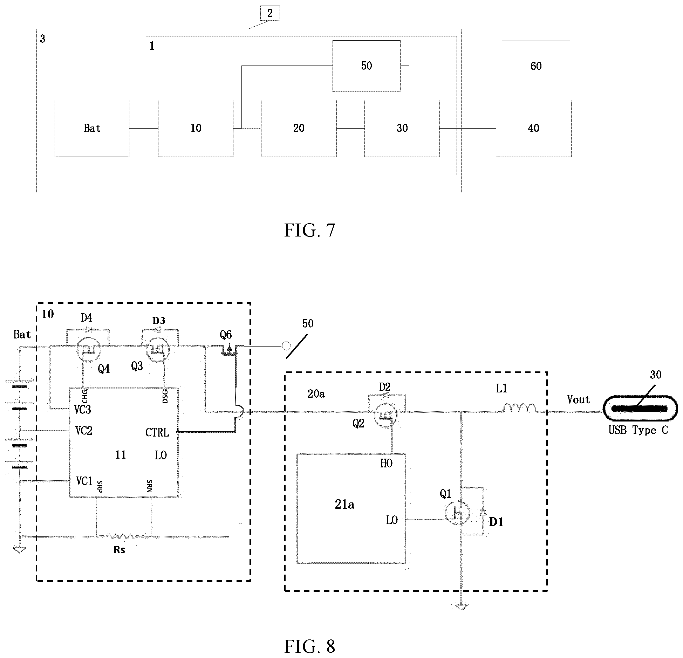

As shown in FIG. 7, the battery control circuit 1 further includes a power supply port 50 configured to connect an electrical device 60. Under a control of the switch control circuit 10, a cell voltage is supplied to the electrical device 60 through the power supply port 50. The switch control circuit 10 of the battery control circuit 1 includes: a third switch, a fourth switch, a sixth switch, and the switch controller 11. One terminal of the fourth switch is connected to the battery cell Bat, and the other terminal of the fourth switch is connected to one terminal of the third switch. One terminal of the sixth switch is connected to the other terminal of the third switch. The other terminal of the sixth switch is connected to the power supply port 50. The switch controller 11 is configured to control turning-on and turning-off of the third switch, the fourth switch and the sixth switch.

As shown in FIG. 8, the third switch is nMOSFET Q3, the fourth switch is nMOSFET Q4, and the sixth switch is nMOSFET Q6. A source of Q4 is connected to an anode of the battery cell Bat. A cathode of the battery cell Bat is grounded. Q3 and Q4 are connected back-to-back. A drain of Q4 is connected to a drain of Q3. A gate of Q3 and a gate of Q4 are respectively connected to two control pins of the switch controller 11: CHG and DSG. A drain of Q6 is connected to a source of Q3. A source of Q6 is connected to the power supply port 50. A gate of Q6 is connected to a control pin CTRL of the switch controller 11.

In the present embodiment, when the battery 2 is working, the CHG pin of the switch controller 11 maintains a low-level output, and Q4 is in a turning-off state. The DSG pin maintains a high-level output, and Q3 is in a turning-on state. A cell voltage is output through the parasitic diode D4 of Q4 and Q3. The switch controller 11 detects a remaining power of the battery Bat. When the remaining power of the battery Bat is greater than a threshold, the CTRL pin of the switch controller 11 outputs a high level, Q6 is turned on. The cell voltage supplies power to the electrical device 60 through Q6 and the power supply port 50. When the remaining power of the battery cell Bat is less than or equal to the threshold, the CTRL pin outputs a low level, Q6 is turned off. Power supply to the electrical device 60 is stopped. Although no power is supplied to the electrical device 60 at this time, the cell voltage is still output to the buck-boost circuit 20a, and the remaining power of the cell can still charge a load.

For a UAV, which is an electrical device with high requirements for power supply safety, when a remaining power of a battery cell is less than a threshold, for example, 30% of a total power, if power to the UAV is continuously supplied, a battery may be too low to meet a voyage range of the UAV, thereby affecting flight safety of the UAV. Therefore, in this case, the battery cell can no longer supply power to the UAV. However, if the remaining power is not used, it will cause a waste of energy. The battery 2 in the present embodiment also has the port 30 for charging a load. For a battery cell whose remaining power is less than the threshold, the remaining power can continue to charge the load. Therefore, a battery can meet the power needs of the UAV and can also charge a load such as a mobile device. Users no longer need to carry a separate charging power source for the mobile device. One thing has a dual purpose, which greatly facilitates users and saves energy.

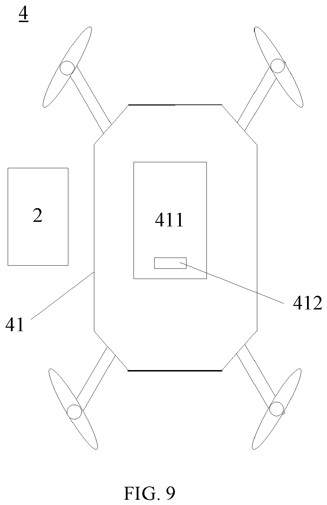

One embodiment of the present disclosure also provides a UAV. As shown in FIG. 9, a UAV 4 includes a body 41 and a battery 2. The body 41 is provided with a slot 411 configured to install the battery 2. The slot 411 is provided with a power receiving port 412 configured to connect a power supply port 50 of the battery 2. The battery 2 supplies power to the body 41 through the power supply port 50 and the power receiving port 412.

Those skilled in the art can clearly understand that, for convenience and brevity of the description, only a division of the above-mentioned functional modules is used for illustration. In practical applications, the above-mentioned function allocation can be completed by different functional modules according to needs, that is, an internal structure of the device is divided into different functional modules to complete all or part of the functions described above. For a specific working process of devices described above, reference may be made to a corresponding process in the above method embodiments, which is not repeated herein.

Finally, it should be noted that the above embodiments are only used to illustrate technical solutions of the present disclosure, not to limit them. Although the present disclosure has been described in detail with reference to the above embodiments, those skilled in the art can still modify the technical solutions described in the above embodiments, or equivalently replace some or all of technical features. In case of no conflict, the features in the embodiments of the present disclosure can be combined arbitrarily. The modifications or replacements do not cause the essence of corresponding technical solutions to deviate from the scope of the technical solutions of the embodiments of the present disclosure.

## Claims

1. A battery control circuit, comprising a switch control circuit, a voltage conversion circuit and a port, wherein:
the switch control circuit is configured to control turning-on and turning-off of a battery cell and the voltage conversion circuit,
one terminal of the voltage conversion circuit is connected to the switch control circuit, and the other terminal is connected to the port,
the port is configured to connect an external device, and
regarding the battery cell and the external device, the voltage conversion circuit is configured to convert a voltage of one of them and the converted voltage is used to charge the other one of them.

2. The battery control circuit according to claim 1, wherein:
the voltage conversion circuit is a buck-boost circuit,
when the external device is a load, the buck-boost circuit is configured to reduce a cell voltage to a load charging voltage to charge the load, and
when the external device is a power source, the buck-boost circuit is configured to boost a power supply voltage to a cell charging voltage to charge the battery cell.

3. The battery control circuit according to claim 2, wherein:
the buck-boost circuit includes: a first switch, a second switch, an energy storage inductor, and a buck-boost controller,
a first terminal of the switch control circuit is connected to the battery cell,
one terminal of the second switch is connected to a second terminal of the switch control circuit, and the other terminal of the second switch is connected to one terminal of the energy storage inductor and one terminal of the first switch,
the other terminal of the energy storage inductor is connected to the port, and
the other terminal of the first switch is grounded, and the buck-boost controller is configured to control turning-on and turning-off of the first switch and the second switch.

4. The battery control circuit according to claim 3, wherein when the external device is a load:
the buck-boost controller controls the first switch to be turned off,
when the buck-boost controller controls the second switch to be turned on, the cell voltage charges the energy storage inductor and the load through the second switch, and
when the buck-boost controller controls the second switch to be turned off, the energy storage inductor charges the load through a bypass of the first switch.

5. The battery control circuit according to claim 3, wherein when the external device is a power source:
the buck-boost controller controls the second switch to be turned off;
when the buck-boost controller controls the first switch to be turned on, the power supply voltage charges the energy storage inductor; and
when the buck-boost controller controls the first switch to be turned off, the energy storage inductor charges the battery cell through a bypass of the second switch.

6. The battery control circuit according to claim 2, wherein:
the switch control circuit includes:
a third switch and a fourth switch, one terminal of the fourth switch being connected to the battery cell, and the other terminal of the fourth switch being connected to one terminal of the third switch; and
a switch controller configured to control turning-on and turning-off of the third switch and the fourth switch, so that the other terminal of the third switch outputs the cell voltage;
the buck-boost circuit includes a fifth switch and an energy storage inductor;
one terminal of the fifth switch is connected to the other terminal of the third switch and one terminal of the energy storage inductor, and the other terminal of the fifth switch is grounded;
the other terminal of the energy storage inductor is connected to the port; and
the buck-boost controller is configured to control turning-on and turning-off of the fifth switch.

7. The battery control circuit according to claim 6, wherein when the external device is a load:
the switch controller controls the fourth switch and the fifth switch to be turned off,
when the switch controller controls the third switch to be turned on, the cell voltage charges the energy storage inductor and the load through a bypass of the fourth switch and the third switch, and
when the switch controller controls the third switch to be turned off, the energy storage inductor charges the load through a bypass of the fifth switch.

8. The battery control circuit according to claim 6, wherein when the external device is a power source:
the switch controller controls the fourth switch to be turned on and controls the third switch to be turned off,
when the switch controller controls the fifth switch to be turned on, the power supply voltage charges the energy storage inductor, and
when the switch controller controls the fifth switch to be turned off, the energy storage inductor charges the battery cell through the fourth switch and a bypass of the third switch.

9. The battery control circuit according to claim 1, wherein:
the external device is a load, the voltage conversion circuit is a step-down circuit, and the step-down circuit is configured to reduce a cell voltage to a load charging voltage to charge the load.

10. The battery control circuit according to claim 9, wherein:
a first terminal of the switch control circuit is connected to the battery cell, and a second terminal of the switch control circuit is configured to output the cell voltage, and
the step-down circuit has an input terminal connected to the second terminal of the switch control circuit, has an output terminal connected to the port, and is configured to step down the cell voltage for output.

11. The battery control circuit according to claim 9, further comprising:
an energy storage inductor and a freewheeling diode, wherein the switch control circuit includes:
a third switch and a fourth switch, one terminal of the fourth switch being connected to the battery cell, and the other terminal of the fourth switch being connected to one terminal of the third switch; and
a switch controller configured to control turning-on and turning-off of the third switch and the fourth switch, so that the other terminal of the third switch outputs the cell voltage; and
the third switch, the energy storage inductor, the freewheeling diode and the switch controller form the step-down circuit, and an output terminal of the step-down circuit is connected to the port and configured to step down and output the cell voltage.

12. The battery control circuit according to claim 11, wherein:
when the switch controller controls the third switch to be turned on, the cell voltage charges the energy storage inductor and the load through the third switch and a bypass of the fourth switch, and
when the switch controller controls the third switch to be turned off, the energy storage inductor charges the load through the freewheeling diode.

13. The battery control circuit according to claim 1, wherein:
the external device is a power source, the voltage conversion circuit is a boost circuit, and the boost circuit is configured to boost a power supply voltage to a cell charging voltage to charge the battery cell.

14. The battery control circuit according to claim 13, wherein:
an input terminal of the boost circuit is connected to the port and configured to input the power supply voltage, an output terminal is configured to output a battery charging voltage, and
a second terminal of the switch control circuit is connected to the output terminal of the boost circuit, a first terminal of the switch control circuit is connected to the battery cell and configured to output the cell charging voltage.

15. The battery control circuit according to claim 1, wherein the port includes a USB interface, further preferably, wherein the USB interface includes at least one of the following: USB micro interface, USB mini-interface, or USB type C interface.

16. The battery control circuit according to claim 4 or 12, wherein the third switch and the fourth switch are MOSFET tubes.

17. The battery control circuit according to claim 16, wherein:
a source of the fourth switch is connected to the battery cell, a drain is connected to a drain of the third switch, a source of the third switch is configured to output a cell voltage, and
a gate of the fourth switch and a gate of the third switch are respectively connected to a first control pin and a second control pin of the switch controller.

18. The battery control circuit according to claim 9, wherein the first switch and the second switch are MOSFET tubes.

19. The battery control circuit according to claim 18, wherein a drain of the second switch is connected to a second terminal of the switch control circuit, a source of the second switch is connected to one terminal of the energy storage inductor and a drain of the first switch, a source of the first switch is grounded, a gate of the second switch and a gate of the first switch are respectively connected to a first control pin and a second control pin of the buck-boost controller.

20. The battery control circuit according to claim 12, wherein the fifth switch is a MOSFET tube.

21. The battery control circuit according to claim 20, wherein a drain of the fifth switch is connected to the other terminal of the fourth switch and one terminal of the energy storage inductor, a source of the fifth switch is grounded, and a gate of the fifth switch is connected to a control pin of the switch controller.

22. A battery, comprising a battery cell, a housing, and the battery control circuit according to any one of claims 1 to 21, the battery cell and the battery control circuit being packaged in the housing.

23. The battery according to claim 22, wherein the battery control circuit further includes a power supply port configured to be connected to an electrical device, under a control of the switch control circuit, a cell voltage supplying power to the electrical device through the power supply port.

24. The battery according to claim 23, wherein:
the switch control circuit includes a third switch, a fourth switch, a sixth switch, and a switch controller,
one terminal of the fourth switch is connected to the battery cell, the other terminal of the fourth switch is connected to one terminal of the third switch, and
one terminal of the sixth switch is connected to the other terminal of the third switch, the other terminal of the sixth switch is connected to the power supply port, the switch controller is configured to control turning-on and turning-off of the third switch, the fourth switch and the sixth switch.

25. The battery according to claim 24, wherein:
when a remaining power of the battery cell is greater than a threshold, the switch controller controls the third switch and the sixth switch to be turned on, the cell voltage supplies power to the electrical device through a bypass of the fourth switch, the third switch, and the sixth switch, and
when a remaining power of the battery cell is less than or equal to the threshold, the switch controller controls the sixth switch to be turned off and stops supplying power to the electrical device.

26. The battery according to claim 25, wherein the third switch, the fourth switch and the sixth switch are MOSFET tubes.

27. The battery according to claim 26, wherein:
a source of the fourth switch is connected to the battery cell, a drain of the fourth switch is connected to a drain of the third switch, a source of the third switch is connected to a drain of the sixth switch, a source of the sixth switch is connected to the port, and
gates of the third switch, the fourth switch and the sixth switch are respectively connected to a first control pin, a second control pin and a third control pin of the switch controller.

28. The battery according to claim 27, wherein the electrical device is an unmanned aerial vehicle.

29. An unmanned aerial vehicle, comprising: a body and the battery according to any one of claims 23 to 28; the body being provided with a slot configured to install the battery; and a power receiving port being provided in the slot configured to connect a power supply port of the battery.
